# EUROPEAN PATENT APPLICATION

(11) **EP 2 645 627 A1**
(43) Date of publication of application: **02.10.2013**
(21) Application number: 12305347.2
(22) Date of filing: 26.03.2012
(51) Int. Cl.: H04L 12/24

(54) **Method for managing a communication network**

(71) Applicant: Alcatel Lucent, 75007 Paris (FR)
(72) Inventor: Omero, Massimiliano, 16147 GENOVA (IT)
(74) Representative: Colombo, Stefano Paolo

(57) **Abstract**

It is disclosed a method for managing a network element of a communication network. The communication network comprises a network manager cooperating with the network element. The method comprises: at the network manager, issuing a request to the network element for performing a management operation upon the network element, and at said network element: processing the request and checking whether it may be fulfilled; and in the negative, writing in an error table of a database (DB) of the network element an error record indicative of a reason why the request can not be fulfilled and associating to the error record one or more management information. The method further comprises, at the network manager, issuing a further request to the network element for searching the table by using the management information and recovering the error record.

## Description

### Technical field

The present invention generally relates to the field of communication networks. In particular, the present invention relates to a method for managing a communication network.

### Background art

Management operations in a communication network include, typically, monitoring performances of the network elements, configuring the network elements and their resources (ports, boards, cross-connections, etc.), updating the software applications stored at the network elements and managing possible failures occurring in the network.

As known, managing a communication network is performed by implementing a network management protocol. Among the protocols that may be used, the Simple Network Management Protocol (SNMP) allows managing network elements in a IP (Internet Protocol) communication network. Indeed, the SNMP protocol belongs to the application layer of the Internet Protocol suite. The protocol is described in particular in the RFC 1157 and RFC 1905 documents by the IETF (Internet Engineering Task Force).

An SNMP managed communication network comprises the following components:
- managed network elements;
- agents; and
- one or more Network Management Systems (NMS).

Network elements typically comprise routers, switches, bridges, servers, hubs, workstations, printers, modem racks, and so on. An SNMP managed network element comprises an SNMP agent that allows the NMS to access the management information residing in the network element.

The SNMP agent is a software component suitable for interacting with the manager via the SNMP. The agent typically has knowledge of the management information stored within the network element and translates them in a format suitable for making them exchangeable with the NMS via the SNMP. Then, the agent allows the network element to interpret the instructions sent by the NMS and to execute such instructions.

The NMS is typically an entity residing on a computer connected to the communication network having the task of executing applications for performing management operations on the managed network elements.

The managed element typically comprises a database known as the management information base (MIB). The MIB is a collection of the management information (also referred to as "objects", and relating to features describing the managed element network resources such as, for instance, network interfaces) stored by the managed element and it is organized hierarchically. The objects in the MIB are in the form of variables, which are addressed through respective object identifiers (OID). The variables substantially describe the managed element system configuration and may be read, set or modified by the NMS via the management protocol. Each object is associated to a number of objects instances depending for instance on the number of resources related thereto. Within a MIB, the objects may be scalar or tabular (MIB tables): a scalar object defines a single object instance, while a tabular object comprises a number of object instances grouped in a table.

The MIB typically comprises a number of "standard" objects. For instance, according to the definition given in RFC 1213 document by the IETF, on page 19, the object "ifAdminStatus" in a MIB of a SNMP managed element relates to the desired state of an interface. It may be set to 1 for bringing the interface up, to 2 for bringing the interface down and to 3 for a test mode. The object "ifAdminStatus" in the MIB may have a number of different instances according to the number of different interfaces comprised within the managed element.

To perform a management operation, typically the NMS issues a request to one or more managed elements, which return responses to the NMS through their agents. According to the SNMP, the basic operations performed are Get and Set. The Get operation is used by the NMS to retrieve the value of one or more variables stored in the MIB of a managed network element. The Set operation is used by the NMS to set the values of one or more variables of the MIB in a managed network element. Further operations are:
- Trap operation, which is used by an agent of a managed element to asynchronously inform the NMS of a significant event;
- GetNext operation, which is used by the NMS to retrieve the value of the next variable in the MIB of a managed element;
- GetBulk operation, which is s used by the NMS to retrieve large blocks of data, such as multiple rows in a MIB; and
- Inform operation, which is used by one NMS to send trap information to another NMS and to then receive a response.

For implementing the operations above, typically the NMS issues requests and the managed network elements return responses. For practical implementation, the NMS and the agents residing in the network elements exchange management messages containing a message header and a Protocol Data Unit (PDU). PDUs are identified according to the specific SNMP operation they are related to. Moreover, they may be associated to the requests (e.g. according to the Get operation, the NMS may request the value of a variable to an agent) or to the responses (e.g. the agent provides the NMS with the requested value). Each PDU contains a field "PDU type" identifying the function of the PDU. The PDU types are: GetRequest, SetRequest, Trap, GetNextRequest, GetBulkRequest, InformRequest, Response.

Each PDU contains an identifier associating requests to responses. For instance, an NMS may use a GetRequest PDU comprising a request identifier for retrieving a value of a variable stored in the MIB of a managed element. The managed element receiving the GetRequest PDU issues a GetResponse PDU containing the same request identifier and the value of the requested variable.

Then, each PDU comprises a number of object data fields suitable for containing the object identifiers of variables and the current values thereof. For instance, an NMS may issue a SetRequest PDU to request to change the value of a variable at a managed element. Then the PDU issued by the NMS contains the object identifier of the variable whose value is to be changed and the new value. Moreover, an NMS may issue a GetRequest PDU to retrieve the value of a variable. In this case, such GetRequest PDU contains an object data field with the object identifier of the variable to be retrieved and no value. The managed element receiving the GetRequest PDU then issues a Response PDU with an object data field containing the same object identifier and the current value of the variable.

A PDU also contains two fields suitable for reporting errors possibly occurring when an operation is processed and fails causing the corresponding request to be denied. These fields are indicated as "error-status" field and "error-index" field. The error reporting fields are set to specific values only in Response PDUs, while in the PDUs of other types they are set to zero. Specifically, the "error-status" field contains an integer value indicative of the result of a request for performing a management operation by the NMS. A value of zero indicates that no error occurred; a finite number of other values (also referred to as error codes) indicate what kind of error happened while processing the request. The "error-index" field contains, when the "error-status" field is non-zero, a pointer associating the error with a particular object instance.

### Summary of the invention

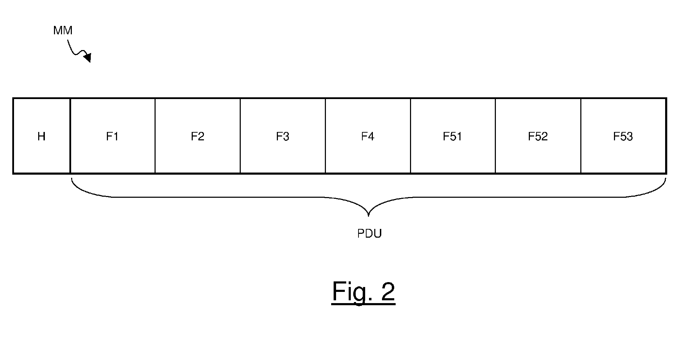

The inventor noticed that, in case of failure when a request is processed, only a limited number of error codes may be used in the "error-status" field of a Response PDU sent by the agent to the NMS for reporting the error. Figure 2 shows the error codes for the SNMP according to RFC 1905 (pages 6-7). The possible error codes of Figure 2 are 18 and describe a set of failure scenarios. For instance, the error code "inconsistentvalue" may be used when a request of modifying the value of a variable can not be fulfilled.

As mentioned above, if a failure occurs, the request is typically denied. When the NMS receives from the agent the Response PDU indicating that an error has occurred (i.e. the "error-status" field is nonzero), the error is typically reported to a network operator or to a user interfaced with the network via the NMS. However, the limited number of error codes can not cover all the possible failure scenarios. Therefore, it is very difficult for the user to understand the reason why the request has been denied and to take appropriate countermeasures. The NMS may provide the operator or user a generic message of failure using the information contained in the "Error status" field of the Response PDU. The information is however poor and does not tell the user the reason why the failure occurred. The user is then unable to take appropriate countermeasures for overcoming the failure. Moreover, the NMS may start the execution of a number of checks on its internal database or it may perform a huge number of additional Get requests to provide the user a more detailed reason for the failure. However, these additional operations performed by the NMS are very time and CPU consuming and do not guarantee that the NMS identifies the cause for the denial.

In view of the above, it is an object of the present invention to provide a method for managing a communication network which overcomes the aforesaid drawback. In particular, it is an object of the present invention to provide a method for managing a communication network which allows reporting the errors in a more efficient way without modifying the network management protocol supported within the communication network.

In the following description and in the claims, the terms "failure", "error", "request denial" and "failed operation" will be used to refer to a condition in which a management operation fails.

According to a first aspect, the present invention provides a method for managing a network element of a communication network, the communication network comprising a network manager cooperating with the network element, the method comprising:
a) at the network manager, issuing a request to the network element for performing a management operation upon the network element, and
   at the network element:
b) processing the request and checking whether it may be fulfilled; and
c) in the negative, writing in an error table of a database of the network element an error record indicative of a reason why the request can not be fulfilled and associating to the error record one or more management information,
   the method further comprising, at the network manager:
d) issuing a further request to the network element for searching the table by using the management information and recovering the error record.

Preferably, issuing a request and issuing a further request comprise issuing a respective request management message formatted according to a network management protocol.

Preferably, the method further comprises, at the network element and after step c), issuing an error management message indicative of the fact that the request has not been fulfilled and comprising the one or more management information.

Preferably, the error management message is formatted according to the network management protocol.

Preferably, recovering comprises, at the network element, reading within the error table the error record using the management information as indexes and sending the error record to the network manager in a further response error management message formatted according to the network management protocol.

Preferably, the management protocol is the simple network management protocol, SNMP.

Preferably, the management information comprise one or more of the following: an address of the network manager and an identifier of the request.

Preferably, the error record comprises a date and a time indicative of when the request has been processed.

Preferably, the error record is a sequence of characters of a human readable and understandable alphabet, the sequence of characters being descriptive of the reason.

Preferably, the method further comprises reporting the error record to a network operator.

According to a second aspect, the present invention provides a network element of a communication network, the communication network further comprising a network manager cooperating with the network element, the network element comprising a database, the network element being configured to:
- processing a request from the network manager for performing a management operation upon the network element and checking whether it may be fulfilled; and
   - in the negative, writing in an error table of the database an error record indicative of a reason why the request can not be fulfilled and associating to the error record one or more management information.

Preferably, the database is a management information base, MIB.

According to a third aspect, the present invention provides a communication network comprising a network manager and a network element as set forth above.

According to a fourth aspect, the present invention provides a computer program product comprising computer-executable instructions for performing, when the program is run on a computer at a network element of a communication network, the communication network further comprising a network manager cooperating with the network element, the following steps:
- processing a request from the network manager for performing a management operation upon the network element and checking whether it may be fulfilled; and
- in the negative, writing in an error table of a database of the network element an error record indicative of a reason why the request can not be fulfilled and associating to the error record one or more management information.

### Brief description of the drawings

Embodiments of the invention will be better understood by reading the following detailed description, given by way of example and not of limitation, to be read with reference to the accompanying drawings, wherein:
- Figure 1 shows a communication network according to an embodiment of the present invention;
- Figure 2 shows possible error codes according to SNMP;
- Figure 3 shows a management message;
- Figure 4 shows an exemplary errorLog table;
- Figure 5 is a flowchart illustrating the steps of the method according to an embodiment of present invention.
- Figure 6 is a flowchart illustrating an example of application of the method of the present invention in an SNMP managed communication network.

### Detailed description of preferred embodiments of the invention

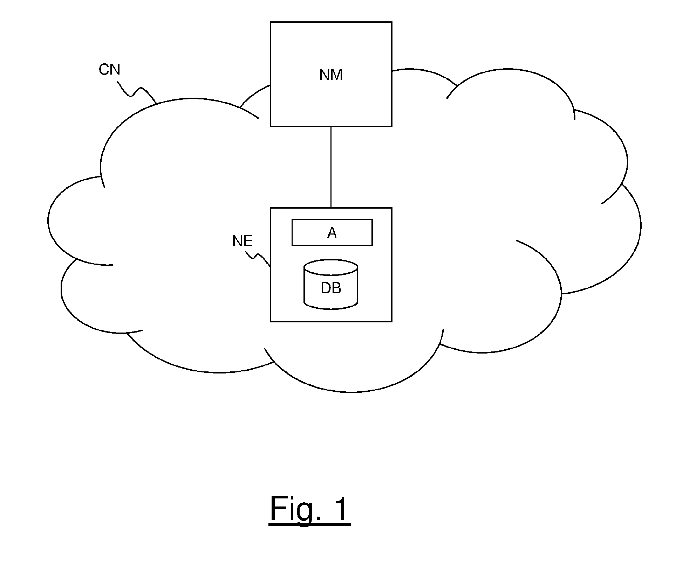

Figure 1 schematically shows a communication network CN. The communication network CN comprises a number of network elements and one or more network managers connected to the network elements. For sake of example, in Figure 1 only one network element NE and one network manager NM connected thereto are shown. The network element NE of the communication network CN may comprise a router, a switch, a bridge, a server, a hub, a workstation, a printer, a modem rack, and so on.

The communication network CN is preferably a packet-switched communication network, more preferably an IP (Internet Protocol) network, i.e. a network using the Internet Protocol Suite. The communication network CN may be, for instance, a LAN (Local Area Network) network based on the Ethernet technology.

The network manager NM is adapted to execute applications for performing management operations upon the network elements of the communication network CN. The network manager NM may be implemented on a stand-alone network apparatus connected to either any one of the network elements or to a single network element. Moreover, the network manager NM may be installed on a same network apparatus as any one of the network elements of the communication network CN. In Figure 1 it is assumed that the network manager NM and the network element NE to be managed are separated and connected by means of the communication network CN.

The network manager NM and the network element NE support a network management protocol. Preferably, the network manager NM and the network element NE support the Simple Network Management Protocol (SNMP). Preferably, the network manager NM is an SNMP-based network management system (NMS). It should be noticed that SNMP is a non limiting example of a management protocol that may be supported by the network manager NM and the network element NE. Indeed, the following description of the method according to the invention could also apply to other management protocols.

The network element NE of the communication network CN shown in Figure 1 comprises an agent A and a database DB. The agent A is adapted to communicate with the network manager NM. The database DB is adapted to store management information related to the management of the network element NE. Preferably, the database DB is a management information base (MIB). Therefore, preferably, the database DB stores a collection of management objects that may be organized hierarchically. The objects are related to features or attributes describing the network resources (e.g. interfaces, boards, and so on) comprised within the network element NE. The objects in the database DB are in the form of variables and are addressed through respective object identifiers. Each object is associated to a number of objects instances depending for example on the number of resources related thereto. The database DB further optionally stores a value associated to each object instance.

As described above, to perform a management operation, the network manager NM issues a request to the managed network element NE to read or set one or more variables stored in the database DB, and the managed network element NE returns a response to the network manager NM through the agent A. Each request to perform a management operation is identified by a request identifier, which is also associated to the corresponding response.

The network manager NM and the agent A of the network element NE preferably communicate requests and responses by exchanging management messages. The management messages are preferably packets exchanged through the communication network CN. Each management message comprises a set S1 of management information which are formatted according to the network management protocol supported by the network manager NM and the network element NE. Among the set S1 of management information that may be comprised within the management messages exchanged between the network manager NM and the agent A are:
- an address of the protocol entity issuing the request (i.e. the network manager NM);
- a management message type which is indicative of the type of management operation to be carried out by the message;
- the request identifier indicative of the particular management operation to be carried out by the management message;
- an error identifier indicative of the type of error occurred, if any; and
- objects identifiers of the variables involved in the management operation and their respective values.

Figure 2 shows an exemplary management message MM exchanged between the network manager NM and the agent A of the network element NE. In particular, the management message MM of Figure 2 is formatted according to SNMP.

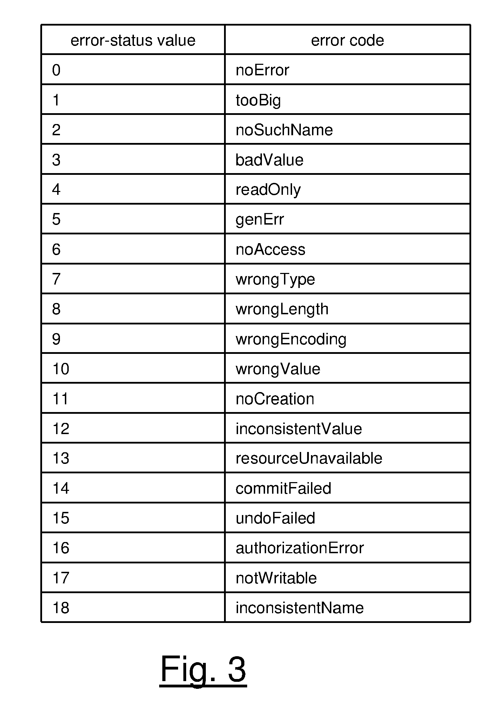

By referring to Figure 2, the management message MM comprises a header H and a protocol data unit PDU. The header H contains a number of header fields (not shown) of predetermined size (i.e. of a predetermined number of bytes). In particular, the header H may contain an header field comprising the management protocol version. Other header fields will not be described herein as they are not relevant for the present invention. The data unit PDU contains a number of data fields. In particular, the data unit PDU of the management message MM shown in Figure 2 contains:
- a first data field F1 comprising the type of data unit PDU as described above. The content of the first data field F1 may be an integer of size equal to 4 bytes. According to SNMP, the GetRequest PDU may be associated to value 0, the GetNextRequest PDU may be associated to value 1, the Response PDU may be associated to value 3, the SetRequest PDU may be associated to value 3, the GetBulkRequest PDU may be associated to value 5, the InformRequest PDU may be associated to value 6 and the Trap PDU may be associated to value 7. This field will be referred to in the following as "PDU type" field;
- a second data field F2 comprising a request identifier which allows matching requests with responses. Indeed, the request identifier is generated by the entity (i.e. the network management station NMS) that issues a request and copied also in the data unit PDU issued by the responding entity. The content of the second data field F2 may be an integer of size equal to 4 bytes. This field will be referred to in the following as "request-id" field;
- a third field F3 comprising an error code indicative of the result of a request by an entity (i.e. the network management station NMS). The content of this field may be an integer of size equal to 4 bytes associated to the error code. Possible error codes according to SNMP are listed in Figure 3. In request management messages, the content of this field is set to zero. In response management messages, the content of this field may assume a value (indicated as "error-status value" in Figure 3) of a predefined set of values from zero to a maximum number. This maximum number is equal to 18 for the set of error codes listed in Figure 3. A value of zero indicates that no error occurred while other values indicate what kind of error happened while processing the request. This field will be referred to in the following as "error-status" field;
- a fourth field F4 comprising a pointer which associates an error with a specific object instance within the list of object instances comprised in an object data field of a request message, as described herein after. The content of this field may be an integer of size equal to 4 bytes. In request management messages, the content of this field is set to zero. This field will be referred to as "error-index" field.

Further, the data unit PDU comprises a number of object data fields. In Figure 2, the exemplary management message MM comprises three object data fields F51, F52, F53. Each object data field comprises an object identifier of a specific object instance and optionally a value associated to such instance.

According to a preferred embodiment of the present invention, the database DB of the network element NE comprises a table for storing records of possible errors occurred at the network element NE when processing requests by the network manager NM, as it will be described herein after. In the following, this table will be referred to as "errorLog table". Preferably, the errorLog table is a tabular object (or MIB table) stored within the MIB of the network element NE. According to MIB notation, the elements of the table are then the object instances related to such tabular object. The errorLog table is preferably written row by row by the agent A of the network element NE, as it will be described herein after. Each time a failure occurs when a request from the network manager NM is processed, such failure causing the request being denied, the agent A fills a row of the errorLog table ELT. Therefore, each row of the errorLog table ELT comprises an object instance associated to a record of a possible error.

In the following, the term "error record" will refer to an extended information about the error, i.e. an information indicating the reason why the error occurred. Each row in the errorLog table preferably comprises an error record and a respective further set S2 of management information I1, I2, ..., In related to the management operation which generated the error. Preferably, S2 ⊆ S1, i.e. the set S2 is a subset of the set S1 of management information comprised within the management message associated to the request for the failed management operation. The set S2 of management information may comprise:
- the address of the entity (i.e. the network manager NM) which sent the request for performing the failed management operation; and
- the request identifier of the failed management operation.

Each error record in the errorLog table is then indexed by the management information I1, I2, ..., In associated thereto.

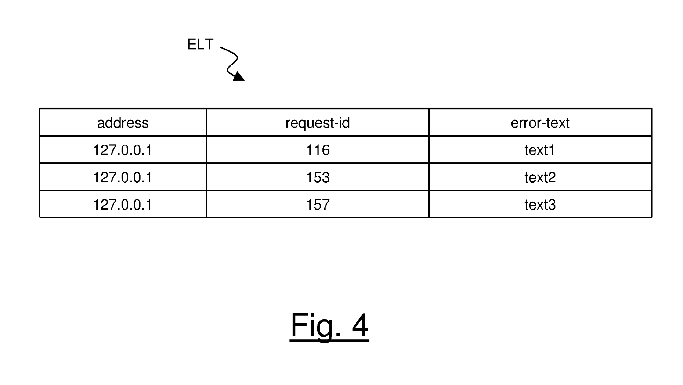

An exemplary errorLog table is shown in Figure 4. In particular, according to a preferred embodiment of the present invention, the errorLog table ELT comprises at least three columns. A first column (identified as "address" in Figure 4) preferably comprises the addresses of the network managers which generated the denied requests. Preferably, the address is the IP address of the network manager (e.g. 127.0.0.1 in Figure 4). In Figure 4, it is assumed, for sake of example, that the network manager which generated the failed requests is always the same, e.g. the network manager NM of Figure 1, but this is not limiting as failed requests to the same network element NE may be issued by different managers connected thereto. A second column (identified as "request-id" in Figure 4) preferably comprises identifiers of the requests which generated the errors ("116", "153", "157" in Figure 4). Preferably, such identifiers are the values comprised within the request-id field of the data unit PDU carrying the request (e.g. a GetRequest PDU or a SetRequest PDU according to SNMP). A third column (identified as "error-text" in Figure 4) preferably comprises error records in the form of text strings descriptive of the errors occurred ("text1", "text2" and "text3" in Figure 4). Preferably, each text string explains the reason of the request denial. Moreover, other information may be added in the text string, such as the date and time when the failure occurred. Preferably, the text string is in the form of a sequence of characters of a human readable and understandable alphabet (e.g. of the English alphabet) encoded into bytes according to the known ASCII encoding scheme. Each text string in the errorLog table ELT is then uniquely associated to a respective couple of address - request identifier. In other words, each text string recorded in the errorLog table ELT may be indexed by the associated address and the request identifier.

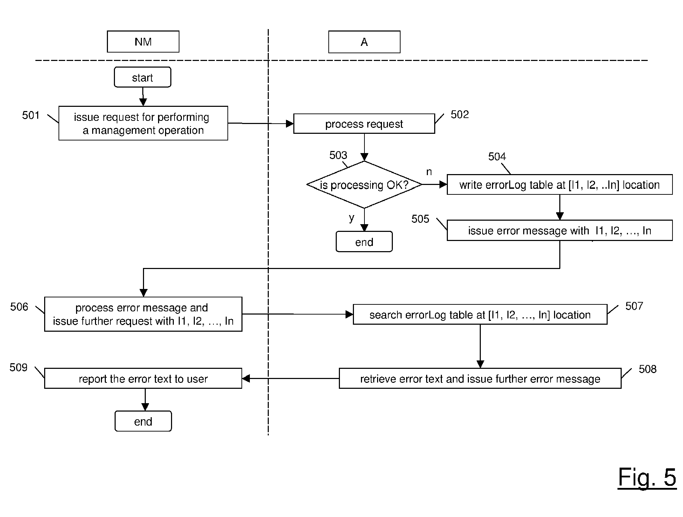

Figure 5 illustrates the fundamental steps of the method for managing a network element NE of the communication network CN according to the present invention.

It is assumed that the communication network CN has been installed and that, when the network element NE starts operating, the errorLog table ELT is empty. Further, it is assumed that a network operator wants to perform a management operation on the network element NE via the network manager NM.

At step 501, the network manager NM issues a request management message comprising a request for performing the management operation, and sends the message to the agent A of the managed network element NE. The request management message preferably comprises one or more of the management information of the set S1 of management information listed above. Then, at step 502, the agent A processes the request, retrieves the management information comprises within the request management message and at step 503 checks whether the request may be fulfilled.

In the affirmative, no further action may be taken and the management operation is successfully carried out. In the negative, i.e. in case the request may not be fulfilled, the agent A preferably writes a row in the errorLog table reporting on the error occurred. In particular, the agent A fills the row with the management information I1, I2, ..., In of the set S2 described above and comprised within the set S1 of management information retrieved by the agent A at step 502. Then, the agent A fills the row also with an error record, i.e. an extended information in the form of a text string of characters (for instance encoded to a sequence of bytes according to the ASCII encoding scheme) describing the reason for the request denial. The location of the error record within the errorLog table is then indexed by the management information I1, I2, ..., In of the set S2. In Figure 5, such location is indicated by the notation "[I1, I2, ..., In]".

At step 505, the agent A preferably issues an error management message comprising the management information I1, I2, ..., In of the set S2 related to the error occurred. At step 506, the network manager NM preferably receives the error management message and retrieves the management information I1, I2, ..., In indexing the error record. Then the network manager NM preferably issues a further request management message comprising the management information I1, I2, ..., In indexing the error record and sends it to the agent A. The agent A at step 507 preferably receives such message and uses the management information I1, I2, ..., In for searching the errorLog table ELT. At step 508 the agent A retrieves from the errorLog table ELT the error record describing the error occurred and preferably issues a further error management message comprising such error record. Then, the agent A sends the further error management message to the network manager NM which, at step 509, retrieves the error record and reports it to the network operator or a user in a human readable and understandable format. In particular, the network manager NM may decode the retrieved text string according to the ASCII encoding scheme and report the decoded characters to the network operator or to the user. For instance, the sequence of characters may be displayed on a video terminal connected to the network manager NM, or it may be played by a loudspeaker connected to the network manager NM.

It is to be noted that the request management message, the error management message, the further request management message and the further error management message are preferably all messages formatted according to the network management protocol supported by the network manager NM and the agent A. The error management message and the further error management message are issued by the agent A only upon a request by the network manager NM, as prescribed by the supported management protocol. Then, advantageously, the method according to the steps of Figure 5 may be implemented without modifying the management protocol.

In the following, an exemplary protocol-specific implementation of the method according to the present invention will be described with reference to the SNMP. In this case, it is assumed that a network operator wants to set the configuration of an interface of the network element NE to a desired state. This is only an example of a possible SNMP management operation that may be performed on the network element NE. For instance, during an initialization phase of the network element NE, the network operator may want to set an Ethernet interface of the network element NE in a down state. The network operator then operates the SNMP network management system or NMS to issue a request to the agent A of the network element NE for setting the configuration of the Ethernet interface to the desired state. In particular, according to SNMP, the database DB of the network element NE may comprise an object identifying the desired state of the interfaces of the network element NE. This object may be the "ifAdminStatus" object described above.

Therefore, at step 601 (which corresponds to step 501 of Figure 5), the network management system NMS issues a SetRequest management message MM1 and sends it to the agent A of the network element NE. The SetRequest management message MM1 sent by the network management system NMS comprises the following fields:
- the PDU type set to 3;
- the request-id set to 116 (this is merely an exemplary numerical value identifying the request);
- the error-status set to 0; and
- the error-index set to 0.

Moreover, the management message MM1 comprises a single object data field containing the object identifier of the object instance related to the Ethernet interface. For instance, such object identifier may be in the following form:
1.3.6.1.2.1.2.2.1.7.345
wherein the first ten digits (1.3.6.1.2.1.2.2.1.7) identify the object (ifAdminStatus) and the last digit (345) identifies the object instance (i.e. the Ethernet interface whose configuration is to be modified).

The object data field of the management message MM1 further contains the value which the network management system NMS wants to associate to the object instance, i.e. 2 (which means Ethernet interface set to a down state as described above).

Then, at step 602, the agent A of the network element NE receives the SetRequest management message MM1 and, at step 603, processes it. Steps 602 and 603 correspond to step 502 of Figure 5.

At step 604 (which corresponds to step 503 of Figure 5), the agent A preferably checks whether the request may be fulfilled. In the affirmative, i.e. in case the Ethernet interface may be set to a down state (e.g. because it is inactive at the time the request is received by the network element NE), the agent A preferably issues a Response management message MM2 (step 505). The Response management message MM2 issued by the agent A comprises the following fields:
- the PDU type set to 2;
- the request-id set to 116;
- the error-status set to 0; and
- the error-index set to 0.

Preferably, the request-id field of the Response management message MM2 comprises the same integer value as the corresponding field in the SetRequest management message MM1.

Moreover, the Response management message MM2 comprises the same object data field as the SetRequest management message MM1.

In the negative, i.e. in case the Ethernet interface may not be set to a down state, the agent A preferably fills a row in the errorLog table ELT (for instance, the first row in the errorLog table ELT of Figure 4) with the address of the network management system NMS, the value of the request-id field within the SetRequest management message MM1 (i.e. 116 in the example described above) and a text string text1 (step 606, corresponding to step 504 of Figure 5). The text string text1 is indicative of the reason why the request can not be fulfilled and it may be, for instance, "The interface is crossconnected and can't be turned down".

Moreover, at step 607 (which corresponds to step 505 of Figure 5), the agent A issues a Response management message MM3 for reporting the error to the network management system NMS and sends it to the network management system NMS. For instance, this Response management message MM3 may comprise the following fields:
- the PDU type set to 2;
- the request-id set to 116;
- the error-status set to 12 (corresponding to the error code "inconsistentValue" of Figure 4); and
- the error-index set to 1.

In this example, the value of the error-index field is set to 1 as it relates to the single object instance listed in the object data field of the SetRequest management message MM1.

Moreover, the management message MM3 comprises the same object data field as the management message MM1.

Therefore, if a failure occurs during processing of the request and the value specified in the object data field of the SetRequest management message MM1 can not be assigned to the ifAdminStatus variable related to the Ethernet interface, the agent A uses the Response management message MM3 to report this error to the network management system NMS. Indeed, the agent A sets the error-status field of the Response management message MM3 to the value corresponding to the error code describing the failure (i.e. inconsistentValue, according to the example situation described above).

Then, at step 608, the network management system NMS receives the Response management message MM2 (in case of no failure) or the Response management message MM3 (in case of failure) from the agent A. The network management system NMS preferably checks the error-status field of the Response management message MM2 or MM3 (step 609).

If the error-status field is set to zero, meaning that no error occurred, the network management system NMS takes no further actions.

On the contrary, if the error-status field is set to a nonzero value, meaning that an error occurred, the network management system NMS preferably issues a GetRequest management message MM4 in order to search in the errorLog table ELT the error record corresponding to the error occurred and for recovering the text string describing such error. The GetRequest management message MM4 issued by the network management system NMS preferably comprises the following fields:
- the PDU type set to 0;
- the request-id set to 117;
- the error-status set to 0; and
- the error-index set to 0.

Moreover, the GetRequest management message MM4 preferably comprises one object data field containing the object identifier of the object instance, within the errorLog table ELT, related to the text string describing the error occurred. For instance, such object identifier may be in the following form:
1.3.6.1.4.1.9999.1.3.127.0.0.1.116
wherein the first eight digits (1.3.6.1.4.1.9999.1) identify the object (i.e. the errorLog table ELT) in the database DB of the network element NE; the ninth digit identifies the column of the errorLog table ELT storing the text strings (i.e. the third column); the next four digits (127.0.0.1) identify the address of the network management system NMS and the last digit (116) identifies the identifier of the denied request.

The object data field of the GetRequest management message MM4 may further contain a "null" value as the value associated to the object identifier above.

Then, at step 610, the GetRequest management message MM4 is sent to the agent A.

Steps 608-610 correspond to step 506 of Figure 5.

At step 611, the agent A preferably receives the GetRequest management message MM4 and processes it. In particular, the agent A retrieves, from the object identifier comprised within the object field of the GetRequest management message MM4, the identifier of the column (i.e. 3) of the errorLog table ELT containing the text strings, the address of the network management system NMS (i.e. 127.0.0.1) and the request identifier (i.e. 116). Then, the agent A uses the address and the request identifier as indexes for searching in the errorLog table ELT (step 612). Steps 611 and 612 correspond to step 507 of Figure 5.

The agent A then retrieves the text string describing the error and issues a Response management message MM5. In the exemplary situation described above, the agent A retrieves the text message text1 from the first row of the errorLog table ELT of Figure 4. As already mentioned above, the text string may be, for instance, "The interface is cross-connected and can't be turned down".

The Response management message MM5 issued by the agent A preferably comprise the following fields:
- the PDU type set to 2;
- the request-ID set to 117;
- the error-status set to 0; and
- the error-index set to 0.

Moreover, the management message MM5 preferably comprises one object data field containing the same object identifier as the GetRequest management message MM4 and a value equal to the text string text1 retrieved.

Then, at step 613 (corresponding to step 508 of Figure 5) the agent A sends the Response management message MM5 to the network management system NMS.

At step 614 the network management system NMS receives the Response management message MM5 and retrieves the text string text1 reporting on the error occurred. At step 615 the network management system NMS may decode the text string into a sequence of characters according to the ASCII encoding scheme (e.g., "The interface is cross-connected and can't be turned down" as described above) and report these characters to the network operator or to a user. For instance, the sequence of characters may be displayed on a video terminal connected to the network management system NMS, or it may be played by a loudspeaker connected to the network management system NMS.

Steps 614 and 615 correspond to step 509 of Figure 5.

Therefore, advantageously, the method according to the present invention allows reporting to the network manager a failure of a management operation in a very efficient manner. Indeed, the method is not relying on a limited number of error codes for describing the errors possibly occurring but it allows describing a wider range of error scenarios. Moreover, the method allows reporting the reason for the failure, allowing a network operator to fully understand the cause of the failure and to take appropriate countermeasures. The error may be advantageously reported to the manager in a human readable and understandable format for any failed operation without changing the specific management protocol supported in the communication network. Indeed, the implementation of the method according to the invention only requires the definition of a specific tabular object within the database or MIB of the managed network elements. As apparent from the description above related to SNMP implementation, no modification is required in the SNMP set of operations and in the formatting of the SNMP management messages since the tabular object is accessed through standard SNMP Get/Set operations.

Moreover, advantageously, the responsibility to properly report the error is moved from the manager to the agent. Indeed, for providing the user with a detailed description of the error, the manager has only to interrogate the database of the managed network element whose agent is reporting the error. No additional time and CPU consuming checks by the manager are required, therefore greatly improving the usage of computational and storage resources of the network.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

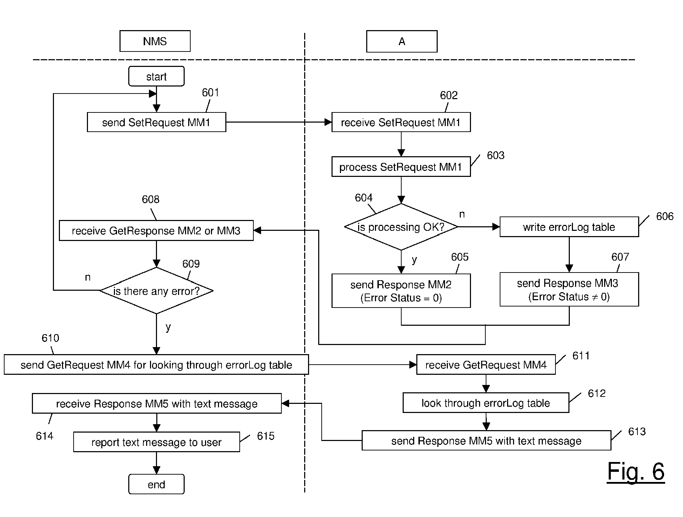

The functions of the various elements shown in the Figure 1, including any functional blocks labeled as "device", "unit", "block" or "processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the terms "processing unit", "device", "block" or "unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like, as that of Figures 5 and 6, represent various processes which may be substantially represented in computer readable medium and so executed by a computer or processor, whether or not such computer or processor is explicitly shown.

## Claims

1. A method for managing a network element (NE) of a communication network (CN), said communication network (CN) comprising a network manager (NM) cooperating with said network element (NE), said method comprising:
a) at said network manager (NM), issuing a request (MM1) to said network element (NE) for performing a management operation upon said network element (NE), and
at said network element (NE):
b) processing said request (MM1) and checking whether it may be fulfilled; and
c) in the negative, writing in an error table (ELT) of a database (DB) of said network element (NE) an error record indicative of a reason why said request (MM1) can not be fulfilled and associating to said error record one or more management information (I1, I2, ..., In),
the method further comprising, at said network manager (NM):
d) issuing a further request (MM4) to said network element (NE) for searching said table (ELT) by using said management information (I1, I2, ..., In) and recovering said error record.

2. The method according to claim 1, wherein said issuing a request (MM1) and said issuing a further request (MM4) comprise issuing a respective request management message (MM1, MM4) formatted according to a network management protocol.

3. The method according to claim 2, wherein it further comprises, at said network element (NE) and after said step c), issuing an error management message (MM3) indicative of the fact that the request has not been fulfilled and comprising said one or more management information (I1, I2, ..., In).

4. The method according to claim 3, wherein said error management message (MM3) is formatted according to said network management protocol.

5. The method according to any of the preceding claims, wherein said recovering comprises, at said network element (NE), reading within said error table (ELT) the error record using said management information (I1, I2, ..., In) as indexes and sending said error record to said network manager (NM) in a further error management message (MM5) formatted according to said network management protocol.

6. The method according to any of claims 2 to 5, wherein said management protocol is the simple network management protocol, SNMP.

7. The method according to any of the preceding claims, wherein said management information (I1, I2, ..., In) comprise one or more of the following: an address of said network manager (NM) and an identifier of said request.

8. The method according to any of the preceding claims, wherein said error record comprises a date and a time indicative of when said request (MM1) has been processed.

9. The method according to any of the preceding claims, wherein said error record is a sequence of characters of a human readable and understandable alphabet, said sequence of characters being descriptive of said reason.

10. The method according to any of the preceding claims, further comprising reporting said error record to a network operator.

11. A network element (NE) of a communication network (CN), said communication network (CN) further comprising a network manager (NM) cooperating with said network element (NE), said network element (NE) comprising a database (DB), said network element (NE) being configured to:
- processing a request (MM1) from said network manager (NM) for performing a management operation upon the network element (NE) and checking whether it may be fulfilled; and
- in the negative, writing in an error table (ELT) of said database (DB) an error record indicative of a reason why said request (MM1) can not be fulfilled and associating to said error record one or more management information (I1, I2, ..., In).

12. The network element (NE) according to claim 11, wherein said database is a management information base, MIB.

13. A communication network (CN) comprising a network manager (NM) and a network element (NE) according to claim 11 or 12.

14. A computer program product comprising computer-executable instructions for performing, when the program is run on a computer at a network element (NE) of a communication network (CN), said communication network (CN) further comprising a network manager (NM) cooperating with said network element (NE), the following steps:
- processing a request (MM1) from said network manager (NM) for performing a management operation upon the network element (NE) and checking whether it may be fulfilled; and
- in the negative, writing in an error table (ELT) of a database (DB) of said network element (NE) an error record indicative of a reason why said request (MM1) can not be fulfilled and associating to said error record one or more management information (I1, I2, ..., In).
